Europäisches Patentamt

European Patent Office

Office européen des brevets

(19)

(11) EP 0 525 473 B1

(12) EUROPÄISCHE PATENTSCHRIFT

(45) Veröffentlichungstag und Bekanntmachung des Hinweises auf die Patenterteilung:
06.05.1998 Patentblatt 1998/19

(51) Int Cl.⁶: **G02F 1/1335**, G02B 27/26

(21) Anmeldenummer: 92111760.2

(22) Anmeldetag: 10.07.1992

(54) **Flüssigkristall-Zelle**

Liquid crystal cell

Cellule à cristal liquide

(84) Benannte Vertragsstaaten:
CH DE FR GB IT LI NL

(30) Priorität: 26.07.1991 CH 2245/91

(43) Veröffentlichungstag der Anmeldung:
03.02.1993 Patentblatt 1993/05

(73) Patentinhaber: Rolic AG
6301 Zug (CH)

(72) Erfinder:
• **Chigrinov, Vladimir Grigorievich**
**Moskau 123481 (RU)**
• **Kozenkov, Valdimir Marcovich**
**Dolgoprudniy 141700, Moskau Region (RU)**
• **Novoseletsky, Nicolic Vasilievich**
**Dolgoprudniy 141704, Moskau Region (RU)**
• **Reshetnyak, Victor Yurievich**
**Kiev 252000, Ukraine (RU)**
• **Reznikov, Yuriy Alexandrovich**
**Kiev 252054, Ukraine (RU)**
• **Schadt, Martin**
**CH-4411 Seltisberg (CH)**
• **Schmitt, Klaus**
**W-7850 Lörrach (DE)**

(74) Vertreter: **Eder, Carl E. et al**
**Patentanwaltsbüro EDER AG**
**Lindenhofstrasse 40**
**4052 Basel (CH)**

(56) Entgegenhaltungen:
EP-A- 0 337 555          EP-A- 0 367 288
EP-A- 0 387 059          US-A- 4 810 433

• PATENT ABSTRACTS OF JAPAN vol. 12, no. 488 (P-803)(3335) 20. Dezember 1988; & JP-A-63 201 626

**Beschreibung**

Die Erfindung betrifft eine Flüssigkristall-Zelle aus einem Flüssigkristall zwischen zwei mit Ansteuerelektroden und Wandorientierungsschichten versehenen Platten.

Es ist bekannt, Flüssigkristallanzeigen oder Flüssigkristall-Lichtventile etc., die in dieser Beschreibung zusammenfassend als Flüssigkristallzellen bezeichnet werden, zu verschiedenen Zwecken mit optisch anisotropen Zusatzschichten oder Zusatzelementen zu versehen. So ist es beispielsweise üblich, die bei hochverdrillten nematischen Flüssigkristallanzeigen (sog. STN- oder SBE-LCDs) typisch auftretende Gelb- oder Blaufärbung durch eine doppelbrechende Zusatzschicht zu kompensieren, um so einen Schwarz-Weiss-Kontrast zu erhalten. Die Zusatzschicht kann flüssigkristallin sein und analog dem elektro-optisch aktiven Flüssigkristalldisplay aufgebaut sein (sog. double layer STN-LCDs). Es sind aber auch nichtflüssigkristalline Kompensationsschichten, z.B. sog. Retarder-folien aus optisch anisotropem Polymermaterial, bekannt. Solche Folien wurden bisher durch mechanisches Recken hergestellt.

Andere Anwendungen von optisch anisotropen Zusatzelementen im Zusammenhang mit Flüssigkristallzellen umfassen den Einsatz von sog. $\lambda$/4-Plättchen oder $\lambda$/2-Plättchen zur Drehung der Polarisationsrichtung von linear polarisiertem Licht oder zur Erzeugung von elliptisch polarisiertem aus linear polarisiertem Licht und umgekehrt.

Die optisch anisotropen Zusatzschichten oder -Elemente werden in der Regel, vor allem, wenn es sich um Polymerfolien handelt, auf die den Flüssigkristall begrenzenden Platten, aufgeklebt. Dies bedingt zusätzliche kritische Arbeitsschritte (blasen- und staubfreie Klebeprozesse). Ausserdem kann die durch das Abziehen der Schutzfolien von den Klebeflächen bewirkte elektrostatische Aufladung und die damit verbundene Staubanreicherung die Ausbeute bei der Herstellung von Flüssigkristallzellen beeinträchtigen. Schliesslich ist es nicht möglich, solche mechanisch gereckten Zusatzschichten mit optischen Eigenschaften herzustellen, die gemäss einem gewünschten Muster variieren.

Dies ist beispielsweise in EP-A-367 288 beschrieben. Die den Flüssigkristall begrenzenden Platten sind mit Zusatzschichten versehen, von denen mindestens eine doppelbrechend ist. Diese Schichten werden getrennt hergestellt und bei der Produktion der Flüssigkristallzellen auf die Platten auflaminiert. Der Oberbegriff von Anspruch 1 stützt sich auf diese Druckschrift.

In JP-A-63-201626 ist ein Stereobildschirm beschrieben, bei dem zur Erzeugung unterschiedlicher Bildinformation für das rechte und das linke Auge eine Polarisatorschicht in Bildpunkte mit abwechselnd unterschiedlicher Polarisationsrichtung unterteilt ist.

Der Erfindung liegt die Aufgabe zugrunde, die Nachteile im Stand der Technik zu beheben und neue Flüssigkristalldisplays und Projektionskonzepte zu realisieren.

Erfindungsgemäss wird diese Aufgabe durch die im Anspruch 1 definierte Flüssigkristall-Zelle gelöst; mindestens eine der Platten weist eine zusätzliche, in Bezug auf senkrechten Lichteinfall optisch anisotrope Schicht (9,31,52) aus einem orientierten Photopolymer auf.

Für den Zweck der vorliegenden Beschreibung wird ein Polymer, dessen Polymerisation durch Lichteinwirkung ausgelöst oder bewirkt wurde als Photopolymer bezeichnet. Im übrigen wird auch Bezug genommen auf die gleichzeitig hinterlegte europäische Patentanmeldung Nr. 92111770.1 (Veröffentlichungsnummer: EP 525 477 A) mit dem Titel "Orientierte Photopolymere und Verfahren zu ihrer Herstellung".

Gemäss einer bevorzugten Ausführungsform der Erfindung ist die Schicht in eine Vielzahl voneinander abgegrenzter Bereiche unterteilt deren optische Eigenschaften von Bereich zu Bereich variieren.

Gemäss einer weiteren bevorzugten Ausführungsform der Erfindung bilden die Bereiche einen regelmässigen Raster, in dem zwei unterschiedliche optische Eigenschaften miteinander abwechseln.

Vorzugsweise variiert der optische Gangunterschied und/oder die Lage des Doppelbrechungsellipsoids bzw. der optischen Achsen von Bereich zu Bereich.

Des weiteren ist der Flüssigkristall vorzugsweise ein hochverdrillter nematischer Flüssigkristall, und weist die Schicht einen optischen Gangunterschied auf, der die inhärente Farbigkeit der Zelle kompensiert.

Alternativ weist die Schicht vorzugsweise einen optischen Gangunterschied auf, der die Farbigkeit der Zelle verändert.

Nach einer besonders bevorzugten Ausführungsform der Erfindung bilden die Bereiche unterschiedliche Farbbildpunkte zur Farbanzeige.

Nach einer anderen bevorzugten Ausführungsform der Erfindung bewirken die optischen Eigenschaften der Bereiche unterschiedliche Polarisationsrichtungen und ermöglichen dadurch die gleichzeitige Darstellung unterschiedlicher Bildinformation, wobei vorzugsweise die unterschiedliche Bildinformation die rechte und linke Bildinformation eines stereoskopischen Bildes ist.

Nach einer weiteren bevorzugten Ausführungsform der Erfindung ist das Zusatzelement Teil eines Bildschirmes in der Bildebene eines Projektionssystems.

Im folgenden werden anhand der beiliegenden Zeichnungen Ausführungsbeispiele der Erfindung beschrieben. Es zeigen:

Fig. 1    eine schematische Darstellung einer farbkompensierten STN-Flüssigkristallanzeige.

Fig. 2    eine schematische Darstellung einer Flüssigkristallzelle zur Farbanzeige

Fig. 3    einen Farbflächenraster der Zelle gemäss Fig. 2

Fig. 4      eine schematische Darstellung einer Flüssigkristallzelle zur Wiedergabe stereoskopischer Bilder

Fig. 5      einen Polarisationsraster der Zelle nach Fig. 4

Fig. 6      eine schematische Darstellung einer Rückprojektionseinrichtung zur Wiedergabe von stereoskopischen Bildern

Durch die orientierte Photopolymerisation, können transparente Polymerschichten mit definiertem optischen Gangunterschied bzw. Retardation $\delta = \Delta n \cdot d$ hergestellt werden, wobei $\Delta n = (n_e - n_o) =$ photoinduzierte optische Anisotropie zwischen dem ordentlichen Brechungsindex $n_o$ und dem ausserordentlichen Brechungsindex $n_e$, d = Dicke der Polymerschicht bedeuten. Der optische Gangunterschied $\delta$ wird sowohl durch die Belichtungsdauer und -Intensität, als auch durch die Schichtdicke d bestimmt und kann Werte im Bereich $0 \leq \delta \leq 400nm$ annehmen. Belichtung des Monomerfilms mit unpolarisiertem Licht führt zu $\delta = 0$. Es kann ferner die Richtung von ne durch die Schwingungsrichtung des zur Polymerisation benutzten linear polarisierten Lichtes bestimmt werden. Die Schwingungsrichtung kann über den Bereich 0° - 180° variiert werden.

Die Möglichkeit, Muster oder grossflächige optische Retarderschichten mit den oben beschriebenen Methoden und Materialien zu bilden, eröffnet eine Vielzahl von Möglichkeiten, neuartige Flüssigkristallanzeigen herzustellen. Die neuen Flüssigkristallanzeigen können sowohl in Transmission als auch in Reflexion betrieben werden. Als elektro-optische Effekte kommen im Prinzip alle bekannten Feldeffekte in Frage, nämlich der Twisted Nematic Effekt (TN-LCDs), Supertwisted Nematic Effekte (STN-LCDs), die Deformation aufgerichteten Phasen (DAP-LCDs), wie auch die folgenden ferroelektrischen Feldeffekte: Surface Stabilized Ferroelectric (SSF)-Effekt, Deformed Helical Ferroelectric (DHF)-Effekt und Short Pitch Bistable Ferroelectric (SBF)-Effekt.

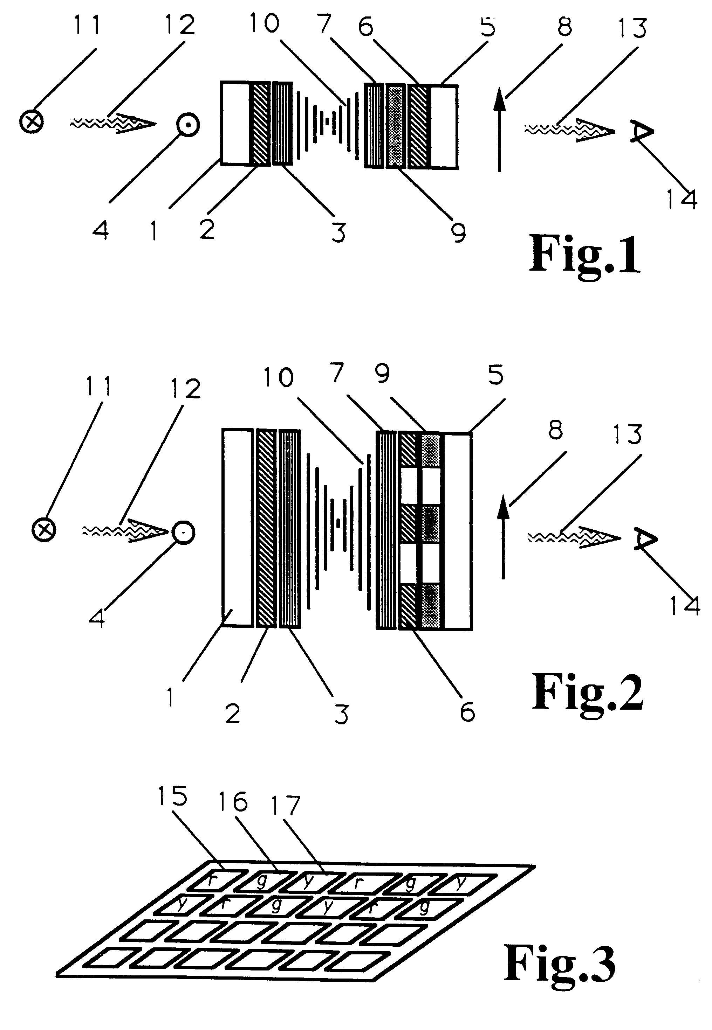

Die in Fig. 1 schematisch gezeigte sog. STN-Zelle besteht aus zwei Glasplatten 1,5, die mit Ansteuerelektroden 2, 6 beschichtet sind. Die Elektroden sind in der Regel, d.h. wenn es sich um eine Anzeigezelle handelt, segmentiert. Die Elektrodenschicht 2 auf der in der Zeichnung links gezeigten Platte 1 ist wie üblich mit einer Orientierungsschicht 3 bedeckt, die die angrenzenden Moleküle des zwischen den Platten befindlichen Flüssigkristalls 10 in eine Vorzugsrichtung ausrichtet

Auch die rechte Platte 5 besitzt auf der dem Flüssigkristall zugewandten Oberfläche eine solche Orientierungsschicht 7. Zwischen ihr und der Elektrodenschicht 6 befindet sich aber noch eine Zwischenschicht 9 aus einem orientierten Photopolymer. Diese Zwischenschicht 9 ist optisch anisotrop und eignet sich daher in an sich bekannter Weise als Retarderschicht zur Farbkompensation von STN-Zellen. Besonders vorteilhaft ist aber bei der vorliegenden Photopolymerschicht, dass ihre anisotropen Eigenschaften durch die Herstellungsbedingungen bei der Photopolymerisation in weiten Grenzen beeinflusst werden können. Der optische Gangunterschied der Schicht 9 und die Richtung der Hauptachse des Doppelbrechungsellipsoids $\Delta n$ können auf diese Weise exakt so ausgebildet werden, dass optimale Farbkompensation stattfindet.

Die Schicht 9 kann, anstatt einheitlich zu sein, auch strukturiert sein, d.h. ihre optischen Eigenschaften können in verschiedenen Flächenbereichen unterschiedlich sein. Auf diese Weise ist es z.B. möglich, Flächenbereiche mit Farbkompensation, d.h. also Schwarz-Weiss-Kontrast, abzuwechseln mit solchen, die nicht kompensiert, d.h. also farbig sind.

Anstelle einer Schicht 9 auf einer der beiden Platten ist es auch möglich auf beiden Platten solche Retarderschichten vorzusehen. Dies ist wichtig im Reflexionsbetrieb der Flüssigkristallzelle.

Die Retarderschicht 9 kann auch zwischen der Glasplatte 1 und der Elektrodenschicht 2 angeordnet sein. Dies ist dann von besonderem Interesse, wenn die Schichtdicke der Retarderschicht 9 sich elektrisch nicht auswirken, d.h. beim Anlegen einer Spannung an die Elektroden kein Spannungsabfall über die Schicht 9 entstehen soll.

Die Retarderschicht 9 kann auch auf die äussere(n) Substratoberfläche(n) 1, 5 aufgebracht werden.

Die Orientierungsschichten 3, 7 können ihre Orientierungswirkung konventionell durch Schrägbedampfung oder durch Reiben erhalten. Es ist aber auch möglich für die Orientierungsschichten orientierte Photopolymere zu verwenden.

Die in Fig. 1 gezeigte Flüssigkristallanzeigezelle wird komplettiert durch einen linearen Eingangspolarisator 4 und einen linearen, zum ersteren gekreuzt angeordneten Ausgangspolarisator 8. Bekanntlich ist es auch möglich, anstelle der Linearpolarisatoren Zirkularpolarisatoren einzusetzen.

Von einer Lichtquelle 11 kommendes unpolarisiertes Licht 12 wird vom Polarisator 4 in Richtung senkrecht zur Zeichenebene linear polarisiert und wird beim Durchlaufen des Flüssigkristalls in dessen gezeigten ausgeschalteten Zustand durch Zerlegung und teilweise Drehung in elliptisch polarisiertes Licht umgewandelt. Ohne die Schicht 9 wäre dieses Licht infolge der wellenlängenabhängig verschiedenen Laufzeit im Flüssigkristall 10 farbig. Die Schicht 9 bewirkt in an sich bekannter Weise eine Farbkompensation, so dass sich ein Schwarz-Weiss-Kontrast zwischen ein- und ausgeschaltetem Zustand ergibt. Der Ausgangspolarisator 8 lässt den parallel zu seiner Polarisationsrichtung schwingenden Teil 13 des Lichts zum Beobachter 14 durch. Im eingeschalteten Zustand und beim Betrieb der STN-Zelle im positiven Kontrast Mode wird der Flüssigkristall 10 für das durchgehende Licht optisch einachsig, so dass die lineare Polarisation bestehen bleibt und der Ausgangspolarisator 8 das Licht sperrt. Der Beobachter 14 sieht kein Licht.

Anstatt den optischen Gangunterschied und die Lage des Doppelbrechungsellipsoids der optischen Retarderschicht so zu wählen, dass die inhärente Farbigkeit von STN-Anzeigezellen kompensiert wird, können diese Werte in Zusammenwirkung mit den Polarisatorstellungen so gewählt werden, dass mit der Zelle nach Fig. 1 Farben erzeugt werden können.

Es ist bekannt, dass sowohl bei optisch bistabilen Feldeffekten, als auch bei solchen mit Graustufen, die den Effekten zugrundeliegenden Eigenschaften (Wave Guiding, Doppelbrechung) mit geeigneten Polarisatorstellungen zu Erzeugung von Farben verwendet werden können. Diese Interferenzfarben können durch zusätzliche Retarderschicht(en) beeinflusst werden. Durch die bereits erwähnte Möglichkeit der Strukturierung der Retarderschicht hinsichtlich ihrer optischen Eigenschaften, d.h. Muster mit unterschiedlichen Gangunterschieden und Lage des Doppelbrechungsellipsoids in verschiedenen Flächenbereichen, sind unterschiedliche nebeneinanderliegende Farbflächen möglich.

Ein Beispiel für eine Farbanzeige mit verschiedenfarbigen Bildpunkten, die in einem regelmässigen Raster nebeneinander angeordnet sind, ist in den Fig. 2 und 3 schematisch dargestellt.

Die in Fig. 2 schematisch im Schnitt gezeigte Anzeigezelle ist weitgehend gleich aufgebaut wie die Zelle nach Fig. 1. In Unterschied zu Fig. 1 sind die Retarderschicht 9 und die Elektrodenschicht 6 miteinander vertauscht. Ausserdem sind diese beiden Schichten entsprechend einem Raster in Einzelflächen aufgeteilt. In der Aufsicht ergibt sich für die Elektrodenschicht 6 und die Retarderschicht 9 das in Fig. 3 gezeigte Bild mit zeilen- und spaltenförmig angeordneten Bildpunkten (Pixel).

Für eine Farbdarstellung wird die Retarderschicht z.B. so ausgebildet, dass sich im Bereich des linken oberen Bildpunktes 15 rot, im Bereich des rechts danebenliegenden Bildpunktes 16 grün, im Bereich des nächsten Bildpunktes 17 der Zeile gelb und danach wieder rot ergibt. In der nächsten Zeile sind die Farben um einen Schritt seitlich verschoben.

Die unterschiedlichen optischen Gangunterschiede der optischen Retarderschicht(en) in den verschiedenen Bereichen können durch unterschiedliche Dauer (Belichtungszeit) der Lichteinstrahlung während der Polymerisation oder durch unterschiedliche Intensität des polymerisierenden Lichtes hergestellt werden.

Zusätzlich können, wie bereits erwähnt, durch sequentielle Photopolymerisation auch die Wandorientierungsschichten in Rasterform mit unterschiedlichen Orientierungsrichtungen herstellt werden. Damit kann auch die relative Lage der nematischen Direktoren bezüglich der Polarisatoren für jeden Bildpunkt variiert werden. Im Zusammenwirken mit den Bildpunkt spezifischen optischen Eigenschaften der Retarderschicht(en) können sehr vielfältige Farbwirkungen erzielt werden.

den.

Die optischen Retarderschichten können auch anders als in Fig. 2 gezeigt zwischen Elektrodenschichten und Wandorientierungsschichten oder auf den Aussenseiten der Glasplatten angebracht werden.

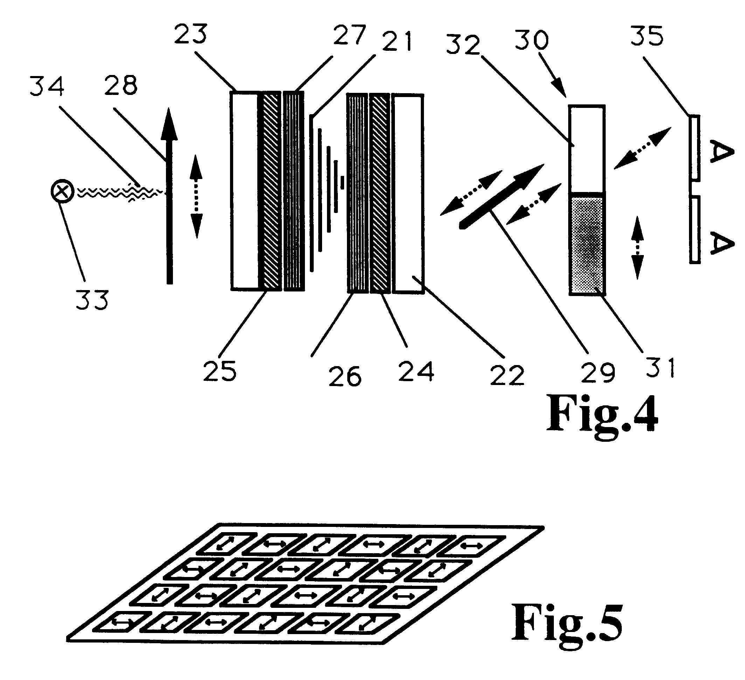

Mit einer wiederum ähnlichen Konfiguration kann eine Flüssigkristallanzeige zur Wiedergabe eines stereoskopischen Bildes verwirklicht werden. Eine solche Anzeige ist in Fig. 4 schematisch im Schnitt gezeigt. Eine konventionelle Drehzelle besteht aus einem um 90° verdrillten nematischen Flüssigkristall 21 zwischen zwei Glasplatten 22, 23 die mit Elektroden 24, 25 und Orientierungsschichten 26, 27 versehen sind.

Ausserdem sind zwei gekreuzte Polarisatoren 28, 29 und auf der lichtausfallseitigen Oberfläche, hinter dem Ausgangspolarisator 29 eine Retarderschicht 30 vorgesehen. Diese Retarderschicht besitzt Bereiche in denen ihr Gangunterschied $\lambda/2$ beträgt und optisch isotrope Bereiche.

Von der Lichtquelle 33 kommendes Licht 34 wird vom Eingangspolarisator 28 linear polarisiert. Die Schwingungsrichtungen des elektrischen Vektors des Lichtes sind jeweils durch die gestrichelten Pfeile angegeben.

Nach dem Durchgang durch die ausgeschaltete Drehzelle schwingt das Licht senkrecht zur Zeichenebene und kann somit den Ausgangspolarisator 29 passieren. Beim Durchgang durch die nachfolgende Retarderschicht 30 erfährt die Polarisationsrichtung eine Drehung um 90° in dem Bereich, in dem die Retarderschicht als $\lambda/2$-Plättchen wirkt. Im anderen Bereich wird die Polarisationsrichtung des Lichts nicht gedreht. Wird nun mittels entsprechender Ansteuerung der zugeordneten Elektrodenbereiche auf den einen Bereich der Retarderschicht die Rechte Bildinformation eines Stereobildes, auf den anderen Bereich die linke Bildinformation gegeben, so kann mittels einer Polarisationsbrille 35 ein Stereobild beobachtet werden.

Bei dieser Anordnung ist es auch möglich, den Ausgangspolarisator 29 und die Retarderschicht zu intergrieren.

In der in Fig. 5 gezeigten Aufteilung der Fläche der Anzeigezelle in Bildpunkte sind die unterschiedlichen Polarisationsrichtungen nebeneinanderliegender Bildpunkte angedeutet, wie sie z.B. für eine Schwarzweiss Wiedergabe geeignet sind. Es ist aber mit entsprechender weiterer Aufteilung der Bildpunkte ohne weiteres möglich, in gleicher Weise eine Farbanzeige zu realisieren.

Der vorstehend für eine TN-Anzeige beschriebene Aufbau ist in gleicher Weise auch mit anderen Flüssigkristalleffekten, wie STN, ferroelektrischen Effekten etc. zu verwirklichen.

Anstatt die Retarderschicht in Bereiche mit $\delta = \frac{\lambda}{2}$ und optisch isotrope Bereiche zu unterteilen, ist auch eine andere Verteilung der optischen Anisotropie möglich. So kann z.B. für den einen Teil der Bereiche $\delta = \frac{\lambda}{4}$ sein, so dass das durchgehende linear polarisierte Licht in zirkular polarisiertes umgewandelt wird, und zwar beispielsweise in rechtsdrehendes. Für den anderen Teil der Bereiche wird auf $\delta = \frac{3}{4}\lambda$ eingestellt, so dass das Licht auch zirkular polarisiert ist, aber umgekehrten Drehsinn hat. Auf diese Weise kann ebenfalls die rechte und die linke Bildinformation getrennt dargestellt und durch eine entsprechende Brille, die einen Links- und einen Rechtszirkularpolarisator enthält, stereoskopisch gesehen werden.

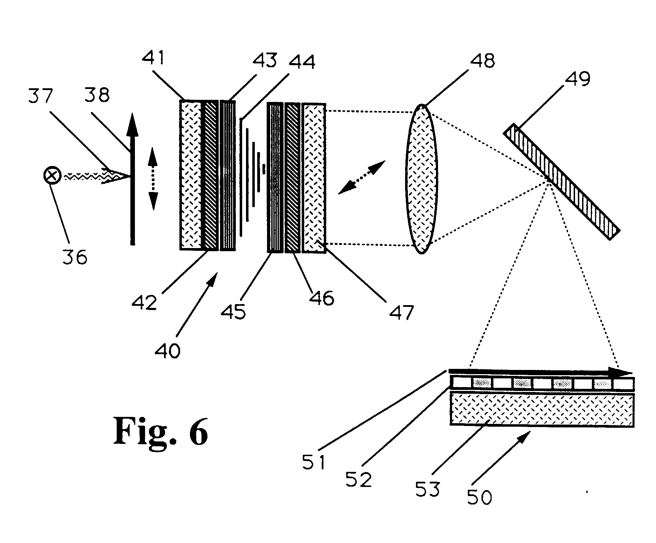

Auf demselben Prinzip beruht die in Fig. 6 gezeigte Rückstereoprojektionseinrichtung. Sie enthält im Weg des von einer Lichtquelle 36 kommenden Lichts 37 zunächst einen Linearpolarisator 38, der das Licht parallel zur Zeichenebene polarisiert. Dahinter befindet sich eine TN-Flüssigkristallzelle 40 bestehend aus einer eingangsseitigen Glasplatte 41 mit einer Elektrodenschicht 42 und einer Orientierungsschicht 43, einem um 90° verdrillten nematischen Flüssigkristall 44 und einer ausgangsseitigen, mit Orientierungsschicht 45 und Elektroden 46 versehenen Glasplatte 47. Im ausgeschalteten Zustand verlässt das Licht die Zelle mit einer um 90° gedrehten Polarisationsrichtung. Das Licht gelangt nun zu einer Fokussierungsoptik 48 und zu einem Spiegel 49. Der Spiegel 49 lenkt das Licht auf einen Projektionbildschirm 50. Dieser besteht aus einem Linearpolarisator 51 und einer Retarderschicht 52, die beide auf einem diffusen transparenten Substrat 53 aufgebracht sind. Der Projektionsbildschirm befindet sich in der Bildebene des Projektionssystems.

Die Retarderschicht besteht aus einem strukturierten Photopolymer mit Bereichen, die zwischen $\delta = \lambda/2$, und isotrop abwechseln. Wie in der Anzeige nach Fig. 4 kann auch bei der Projektionseinrichtung nach Fig. 5 mit zirkular polarisiertem Licht gearbeitet werden, wenn die Retarderschicht in $\frac{\lambda}{4}$- und $\frac{3}{4}\lambda$-Bildpunkte aufgeteilt ist. Falls Farbprojektion erfolgen soll, ist eine entsprechende Aufteilung für alle Farbbildpunkte des rechten und des linken Bildes erforderlich.

## Patentansprüche

1. Flüssigkristall-Zelle die zwischen zwei mit Ansteuerelektroden (2,6;24,25;42,46) und Wandorientierungsschichten (3,7;26,27;43,45) versehenen Platten (1,5;22,23;41,47) einen Flüssigkristall (10,21,44) enthält, wobei mindestens eine der Platten eine zusätzliche, in Bezug auf senkrechten Lichteinfall optisch anisotrope Schicht (9,31,52) aufweist, dadurch gekennzeichnet, dass die zusätzliche Schicht aus einem orientierten Photopolymer besteht, das durch Einwirkung von linear polarisiertem Licht polymerisiert wurde.

2. Flüssigkristall-Zelle nach Anspruch 1, dadurch gekennzeichnet, dass die zusätzliche Schicht (9,31,52) in eine Vielzahl voneinander abgegrenzter Bereiche (15,16,17) unterteilt ist, deren optische Eigenschaften von Bereich zu Bereich variieren.

3. Flüssigkristall-Zelle nach Anspruch 2, dadurch gekennzeichnet, dass die Bereiche (15,16,17) einen regelmässigen Raster bilden, in dem zwei unterschiedliche optische Eigenschaften miteinander abwechseln.

4. Flüssigkristall-Zelle nach Anspruch 2, dadurch gekennzeichnet, dass der optische Gangunterschied in der zusätzlichen Schicht von Bereich zu Bereich variiert.

5. Flüssigkristall-Zelle nach Anspruch 2, dadurch gekennzeichnet, dass in der zusätzlichen Schicht die Lage der optischen Hauptachse von Bereich zu Bereich variiert.

6. Flüssigkristall-Zelle nach einem der Ansprüche 1-5, dadurch gekennzeichnet, dass der Flüssigkristall (10) ein hochverdrillter nematischer Flüssigkristall ist, und die zusätzliche Schicht (9) einen optischen Gangunterschied aufweist der die inhärente Farbigkeit der Zelle kompensiert.

7. Flüssigkristall-Zelle nach einem der Ansprüche 1-5, dadurch gekennzeichnet, dass die zusätzliche Schicht (9) einen optischen Gangunterschied aufweist der die Farbigkeit der Zelle verändert.

8. Flüssigkristall-Zelle nach Anspruch 7, dadurch gekennzeichnet, dass die Bereiche (15,16,17) unterschiedliche Farbbildpunkte zur Farbanzeige bilden.

9. Flüssigkristall-Zelle nach einem der Ansprüche 3-6, dadurch gekennzeichnet, dass die optischen Eigenschaften der Bereiche unterschiedliche Polarisationsrichtungen bewirken und dadurch die gleichzeitige Darstellung unterschiedlicher Bildinformation ermöglichen.

10. Rückprojektionssystem, das eine Flüssigkristall-Zelle nach Anspruch 9 aufweist, wobei die zusätzliche Schicht Teil eines Bildschirmes in der Gegenstandsebene des Rückprojektionssystems ist.

11. Rückprojektionssystem, das eine Flüssigkristall-Zelle nach Anspruch 9, aufweist, wobei das Zusatzelement Teil eines Bildschirmes in der Bildebene des Rückprojektionssystems ist.

12. Vorwärtsprojektionssystem, das eine Flüssigkristall-Zelle nach Anspruch 9, aufweist, wobei das Zusatzelement Teil eines Bildschirmes in der Gegenstandsebene des Vorwärtsprojektionssystems ist.

13. Vorwärtsprojektionssystem, das eine Flüssigkristall-Zelle nach Anspruch 9 aufweist, wobei das Zusatzelement Teil eines Bildschirmes in der Bildebene des Vorwärtsprojektionssystems ist.

14. Verwendung einer Flüssigkristall-Zelle nach Anspruch 9 in einer Anordnung zur Darstellung stereoskopischer Bilder, wobei die unterschiedliche Bildinformation die rechte und linke Bildinformation des stereoskopischen Bildes ist.

**Claims**

1. Liquid crystal cell comprising a liquid crystal (10, 21, 44) between two plates (1, 5; 22, 23; 41, 47) provided with drive electrodes (2, 6; 24, 25; 42, 46) and wall orientation layers (3, 7; 26, 27; 43, 45), wherein at least one of the plates comprises additionaly and in relation to vertical light irradiation an optically anistropic polymeric layer (9, 31, 52), characterized in that the additional layer is formulated by an oriented photopolymer, which is polymerized by the action of polarized light.

2. Liquid crystal cell according to claim 1, characterized in that the layer (9, 31, 52) is divided into a number of separate regions (15, 16, 17) having optical properties which vary from region to region.

3. Liquid crystal cell according to claim 2, characterized in that the regions (15, 16, 17) form a regular grid in which two different optical properties alternate.

4. Liquid crystal cell according to claim 2, characterized in that the optical path difference in the additional layer varies from region to region.

5. Liquid crystal cell according to claim 2, characterized in that in the additional layer the position of the refraction ellipsoid varies from region to region.

6. Liquid crystal cell according to any one of claims 1 to 5, characterized in that the liquid crystal (10) is a super twisted nematic liquid crystal and that the additional layer (9) has an optical path difference which compensates the inherent colour of the cell.

7. Liquid crystal cell according to any one of claims 1 to 5, characterized in that the additional layer (9) has an optical path difference which alters the colour of the cell.

8. Liquid crystal cell according to claim 7, characterized in that the regions (15, 16, 17) form different colour pixels for the colour display.

9. Liquid crystal cell according to any one of claims 3 to 6, characterized in that optical properties of the regions result in the different directions of the polarization, so that different picture items can be simultaneously displayed.

10. Rear projection system with a liquid crystal cell according to claim 9, wherein the additional layer is part of a screen in the object plane of the rear projection system.

11. Rear projection system with a liquid crystal cell according to claim 9, wherein the additional element is part of a screen in the image plane of the rear projection system.

12. Forward projection system with a liquid crystal cell according to claim 9, wherein the additional layer is part of a screen in the object plane of the forward projection system.

13. Forward projection system with a liquid crystal cell according to claim 9, wherein the additional element is part of a screen in the image plane of the forward projection system.

14. Use of a liquid crystal cell according to claim 9 in a device for reproducing stereoscopic images, wherein the different picture item comprises the right and left item of the stereoscopic picture.

**Revendications**

1. Cellule à cristal liquide, qui contient un cristal liquide (10,21,44) entre des plaques (1,5;22,23;41,47) munies d'électrodes d'activation (2,6;24,25;42,46) et une couche d'orientation en paroi (3,7;26,27; 43,45), au moins l'une des plaques présentant une couche supplémentaire (9,31,52) optiquement anisotrope en ce qui concerne l'incidence de la lumière perpendiculaire, caractérisée par le fait que la couche supplémentaire est constituée d'un photopolymère orienté qui a été polymérisé par l'action d'une lumière polarisée linéairement.

2. Cellule à cristal liquide selon la revendication 1, caractérisée par le fait que la couche supplémentaire (9,31,52) est divisée en une pluralité de zones (15,16,17) séparées l'une de l'autre par des limites et dont les caractéristiques optiques varient d'une zone à l'autre.

3. Cellule à cristal liquide selon la revendication 2, caractérisée par le fait que les zones (15,16,17) forment un réseau régulier dans lequel deux caractéristiques optiques différentes alternent l'une avec l'autre.

**4.** Cellule à cristal liquide selon la revendication 2, caractérisée par le fait que la différence de chemin optique varie d'une zone à l'autre dans la couche supplémentaire.

**5.** Cellule à cristal liquide selon la revendication 2, caractérisée par le fait que dans la couche supplémentaire la position de l'axe optique principal varie d'une zone à l'autre.

**6.** Cellule à cristal liquide selon l'une des revendications 1-5, caractérisée par le fait que le cristal liquide (10) est un cristal liquide nématique en superhélice et que la couche supplémentaire (9) présente une différence de chemin optique qui compense la coloration inhérente de la cellule.

**7.** Cellule à cristal liquide selon l'une des revendications 1-5, caractérisée par le fait que la couche supplémentaire (9) présente une différence de chemin optique qui modifie la coloration de la cellule.

**8.** Cellule à cristal liquide selon la revendication 7, caractérisée par le fait que les zones (15,16 et 17) forment des éléments d'image couleur différents pour l'affichage couleur.

**9.** Cellule à cristal liquide selon l'une des revendications 3-6, caractérisée par le fait que les caractéristiques optiques des zones opèrent des directions de polarisation différentes et permettent de ce fait la représentation simultanée d'informations image différentes.

**10.** Système de rétroprojection qui présente une cellule à cristal liquide selon la revendication 9, la couche supplémentaire faisant partie d'un écran dans le plan objet du système de rétroprojection.

**11.** Système de rétroprojection qui présente une cellule à cristal liquide selon la revendication 9, l'élément supplémentaire faisant partie d'un écran dans le plan image du système de rétroprojection.

**12.** Système de projection épiscopique qui présente une cellule à cristal liquide selon la revendication 9, l'élément supplémentaire faisant partie d'un écran dans le plan objet du système de projection épiscopique.

**13.** Système de projection épiscopique qui présente une cellule à cristal liquide selon la revendication 9, l'élément supplémentaire faisant partie d'un écran dans le plan image du système de projection épiscopique.

**14.** Emploi d'une cellule à cristal liquide selon la revendication 9, dans un dispositif pour représenter des images stéréoscopiques, l'information image différente étant l'information image de droite et l'information image de gauche de l'image stéréoscopique.

**Fig.1**

**Fig.2**

**Fig.3**

**Fig.4**

**Fig.5**

Fig. 6